# EUROPÄISCHE PATENTSCHRIFT

(11) **EP 1 410 091 B1**
(45) Veröffentlichungstag und Bekanntmachung des Hinweises auf die Patenterteilung: **05.04.2006**
(21) Anmeldenummer: 02754905.4
(22) Anmeldetag: 19.07.2002
(51) Int. Cl.: G02B 23/24

(54) **BILDÜBERTRAGUNGSSYSTEM AUS DREI STABLINSEN FÜR STARRE ENDOSKOPE**
IMAGE TRANSMISSION SYSTEM FROM THREE ROD LENSES FOR RIGID ENDOSCOPES
SYSTEME DE TRANSMISSION D'IMAGES CONSTITUE DE TROIS LENTILLES BARREAU POUR ENDOSCOPES RIGIDES

(30) Priorität: 26.07.2001 DE 10136117
(43) Veröffentlichungstag der Anmeldung: 21.04.2004
(73) Patentinhaber: Karl Storz GmbH & Co. KG, 78532 Tuttlingen (DE)
(72) Erfinder: LEI, Fang, 78591 Durchhausen (DE)
(74) Vertreter: Fugmann, Winfried
(86) Internationale Anmeldenummer: PCT/EP2002/008035
(87) Internationale Veröffentlichungsnummer: WO 2003/012521

(56) Entgegenhaltungen:
- GB-A- 1 534 541
- US-A- 5 632 718
- US-A- 5 861 987
- TOMKINSON T H ET AL: "Rigid endoscopic relay systems: a comparative study" APPLIED OPTICS, 1 DEC. 1996, OPT. SOC. AMERICA, USA, Bd. 35, Nr. 34, Seiten 6674-6683, XP002234216 ISSN: 0003-6935
- PATENT ABSTRACTS OF JAPAN vol. 010, no. 165 (P-467), 12. Juni 1986 (1986-06-12) & JP 61 020015 A (OLYMPUS KOGAKU KOGYO KK), 28. Januar 1986 (1986-01-28)

## Beschreibung

Die Erfindung betrifft ein Stablinsensystem als Bildübertragungssystem für starre Endoskope und dgl. Sehrohre zur Übertragung eines distalen Zwischenbildes in ein proximales Zwischenbild.

Endoskope und die oben genannten Sehrohre werden außer in der Medizin auch in der Technik zur Beobachtung in Hohlräumen, wie Körperhöhlen, Brennräumen von Motoren, Triebwerken o.ä. eingesetzt. Je nach Tiefe der zu beobachtenden Hohlräume sind unterschiedliche Übertragungslängen durch das Stablinsensystem zu überbrücken.

Dafür werden auch Relaislinsensysteme genannte Bildübertragungssysteme insbesondere in starren Endoskopen und auch anderen Sehrohren wie Technoskopen, Periskopen und dgl. eingesetzt. Endoskope bestehen aus einem Okularteil, der das Okular enthält, sowie einem länglichen Schaft, in dem weitere optische Bauteile untergebracht sind. Bei diesen weiteren optische Bauteilen handelt es sich um das am vorderen (distalen) Ende des Endoskops befindliche Objektiv und um Bildübertragungs- bzw. Relaislinsensysteme. Das Objektiv nimmt die zu beobachtende Szene auf und entwirft in einer ersten Zwischenbildebene ein Zwischenbild. Dieses Zwischenbild wird von einem Bildübertragungs- bzw. Relaislinsensystem emeut abgebildet und in die nächste Zwischenbildebene weitergeleitet, von wo ein weiteres Bildübertragungs- bzw. Relaislinsensystem die Weiterleitung zur nächsten Zwischenbildebene übernehmen kann, bis das Bild zum Okular gelangt.

Die Verwendung von Stablinsen zur Ausbildung von Bildübertragungssystemen ist erstmals von Prof. Hopkins in der GB-PS 954 629 vorgeschlagen worden. Gemäß diesem grundsätzlichen Vorschlag von Prof. Hopkins besteht jedes Bildübertragungssystem aus zwei bikonvexen stabförmigen Linsen und wenigstens zwei weiteren Meniskuslinsen. Durch die Kombination von stabförmigen bikonvexen Linsen mit Meniskuslinsen lässt sich zum einen eine große Bildhelligkeit erzielen, zum anderen lassen sich die bei Bildübertragungssystemen störenden Bildfehler wie Astigmatismus und Bildfeldkrümmung gut kompensieren.

Ausgehend von den Arbeiten von Prof. Hopkins ist in der Folge eine Vielzahl von abgewandelten Bildübertragungssystemen entwickelt und beschrieben worden, bei denen ebenfalls Stablinsen verwendet wurden.

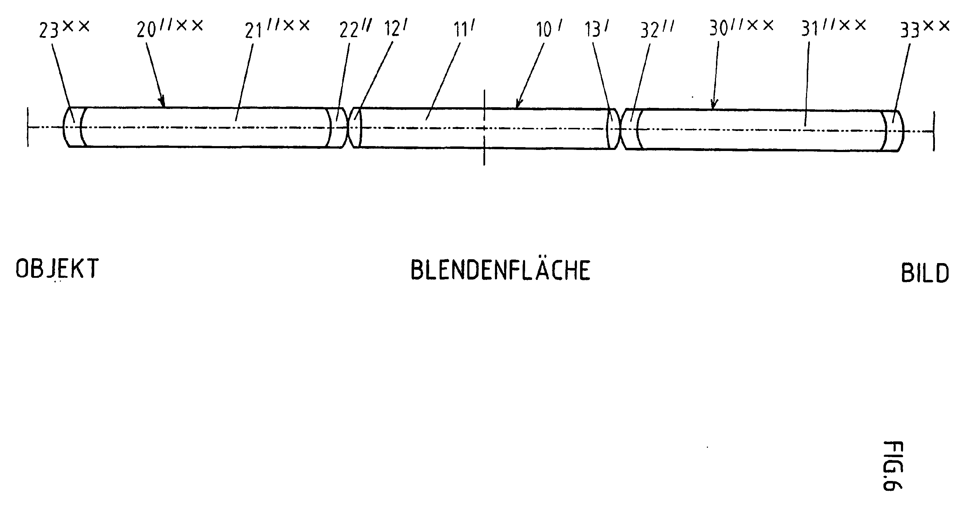

Ein solches Bildübertragungssystem ist beispielsweise aus der EP 0 628 843 bekannt. Dieses bekannte weiterentwickelte Bildübertragungssystem besteht im Ausführungsbeispiel zu Fig. 6 aus einer mittleren und zwei äußeren Stablinsen, wobei an die äußeren Stablinsen jeweils beidseitig eine konvexe Linse und ein weiteres konkaves Linsenelement gekittet sind. Der sich daraus ergebende Linsenaufbau ist hier konvex-konkav. Die mittlere Linse ist bikonvex und einstückig.

Ein weiteres Bildübertragungssystem wird in der US 5,805,345 gezeigt, bei dem als Stand der Technik ein aus drei Linsen bestehendes Stablinsensystem erwähnt ist, bei dem die mittlere Linse entweder als Bikonkavlinse mit beidseitig angekitteten Bikonvexlinsen oder als Bikonvexlinse mit beidseitig angekitteten Meniskuselementen ausgebildet ist. In beiden Fällen sind die äußeren Stablinsen identisch und bikonvex.

Die US 4,168,882 zeigt ein Stablinsensystem mit zwei direkt um die Mittelebene angeordneten Stablinsen, die auf der nach innen gewandten Seite konkav und auf der nach außen gewandten Seite konvex sind, und zwei außerhalb davon angeordneten konvexen Stablinsen. Dabei kann es sich bei den inneren oder den äußeren Stablinsen um Verbundlinsen handeln, wobei an den Flächen, an denen sich die inneren und die äußeren Stablinsen zugewandt sind, an beide jeweils der inneren oder äußeren Stablinsen ein Meniskuselement gekittet ist. Dabei ist die sich ergebende Verbundstablinse an der Meniskusseite konvex, und die äußeren Stablinsen sind ferner bezüglich einer zur optischen Achse senkrechten zwischen den inneren Stablinsen gelegenen Symmetrieebene des Bildübertragungssystems symmetrisch zueinander.

In der US 5,861,987 wird ein Bildübertragungssystem beschrieben, welches aus mehreren Stablinsen besteht. Dabei bestehen die äußeren Stablinsen aus Stablinsenhauptelementen, welche auf der nach innen gewandten Seite aus daran gekitteten Linsenelementen zusammengesetzt sind. Die US 5,861,987 beschreibt bikonvexe Verbundsstablinsen.

Weiteres ist in der US 5,805,345 ein Stablinsensystem bestehend aus zwei identischen bikonvexen äußeren Stablinsen und einer kleineren mittleren Verbundlinse als für die US 5,805,345 grundlegender Stand der Technik beschrieben. Hierbei ist das Verbundlinsenhauptelement der genannten mittleren Verbundlinse gemäß einem Ausführungsbeispiel bikonkav und mit daran gekitteten bikonvexen Linsenelementen versehen und gemäß einem weiteren Ausführungsbeispiel bikonvex und mit daran gekitteten Meniskuselementen versehen. Beim Aufbau dieser Ausführungsbeispiele sind die äußeren Stablinsen von der mittleren Verbundlinse beabstandet, was durch Abstandsrohre bewirkt werden kann, und, wie oben erwähnt, die mittlere Verbundlinse ist wesentlich kürzer als die beiden äußeren Stablinsen.

Diese Bildübertragungssysteme ermöglichen zwar eine gute Korrektur des Astigmatismus und der Bildfeldkrümmung, weisen jedoch den Nachteil auf, dass das übertragene proximale Bild merklich dunkler ist als das distale Ausgangsbild.

Demgemäß liegt der Erfindung die Aufgabe zugrunde, bei möglichst einfachem Aufbau des Stablinsensystems und mit dem gattungsbildenden Stand der Technik vergleichbarer Korrektion der Abbildungsfehler ein möglichst helles Bild bei gegebener Übertragungslänge zu erzielen. Dabei sollen die Bauteilanzahl ebenso wie der Herstellaufwand gering sein.

Gemäß dem Oberbegriff von Patentanspruch 1 weist ein Bildübertragungssystem für starre Endoskope eine mittlere Stablinse und zwei bikonvexe äußere Stablinsen auf, die zueinander bezüglich einer zur optischen Achse senkrechten Mittelebene des Bildübertragungssystems symmetrisch sind, wobei alle Linsenelemente aus optisch homogenem Material bestehen, alle optisch wirksamen Flächen sphärisch sind und zwei Linsenelemente beidseitig an die mittlere Stablinse gekittet sind, so dass die sich daraus ergebende Verbundlinse bikonvex ist.

Gemäß Patentanspruch 1 wird die oben angeführte Aufgabe dadurch gelöst, dass die Stablinsen Scheitel-an-Scheitel aneinander anliegen und die mittlere Stablinse im Wesentlichen gleich lang oder länger als die äußeren Stablinsen ist.

Gemäß dem Oberbegriff von Patentanspruch 2 weist ein Bildübertragungssystem für starre Endoskope eine bikonvexe mittlere Stablinse und zwei äußere Stablinsen auf, die zueinander bezüglich einer zur optischen Achse senkrechten Mittelebene des Bildübertragungssystems symmetrisch sind, wobei alle Linsenelemente aus optisch homogenem Material bestehen, alle optisch wirksamen Flächen sphärisch sind und die äußeren Stablinsen bikonvex sind.

Gemäß Patentanspruch 2 wird die oben angeführte Aufgabe dadurch gelöst, dass an die äußeren Stablinsen auf der nach innen gewandten Seite je ein Linsenelement gekittet ist, so dass die sich daraus ergebende Verbundlinse bikonvex ist, dass die Stablinsen Scheitel-an-Scheitel aneinander anliegen und dass die mittlere Stablinse im Wesentlichen gleich lang oder länger als die äußeren Stablinsen ist.

Durch das Merkmal, dass die Stablinsen direkt (Scheitel-an-Scheitel) aneinander anliegen, kann auf Abstandsrohre verzichtet werden, die eine Querschnittsverkleinerung, also eine Verkleinerung der Lichtdurchgangsfläche mit sich bringen.

Das weitere erfindungsgemäße Merkmal, dass die mittlere Stablinse im Wesentlichen gleich lang oder länger als die äußeren Stablinsen ist bei gegebener Übertragungsweite, bewirkt gegenüber dem Stand der Technik eine Vergrößerung der numerischen Apertur bei Stablinsen. Diese Vergrößerung der numerischen Apertur erlaubt den Durchgang einer größeren Anzahl von Sichtstrahlen, was wiederum eine Erhöhung der Bildhelligkeit bedeutet. Die mittlere Stablinse wird hierbei im Vergleich zum Stand der Technik verlängert und zwar so, dass sie z.B. mindestens 90% der Länge der äußeren Stablinsen besitzt, um eine, wenn nicht optimale, so doch nur um einen vorbestimmten geringen Anteil herabgesetzte Bildhelligkeit zu erzielen, indem die numerische Apertur nur zu einem bestimmten Wert entsprechend der vorgewählten Helligkeit verkleinert wird.

Um eine störende Vignettierung zu verhindern, kann die mittlere Stablinse in der Länge im Verhältnis zu den äußeren Stablinsen nach oben hin begrenzt werden, z.B. auf einen Wert 1,5 mal der Länge der äußeren Stablinsen, was einer vorgewählten maximalen Vignettierung entspricht.

Das weitere Merkmal aus dem kennzeichnenden Teil von Patentanspruch 2

Ein erstes bis dreizehntes Ausführungsbeispiel zeigen vorteilhafte Ausführungsformen der Erfindung.

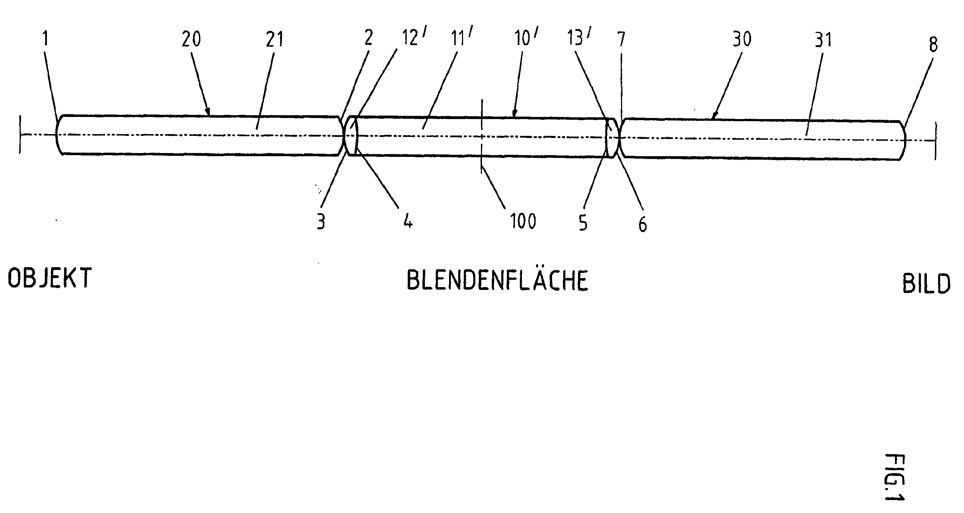

Im ersten Ausführungsbeispiel gemäß Fig. 1 sind an ein mittleres bikonkaves Stablinsenhauptelement (11'), das symmetrisch bezüglich seiner zur optischen Achse senkrechten Mittelebene (100) ist, beidseitig Bikonvexlinsenelemente (12', 13') gekittet, die beiden äußeren Stablinsen (20, 30) sind unverkittet, identisch, bikonvex und symmetrisch bezüglich oben genannter Mittelebene (100) angeordnet. Darüberhinaus ist die mittlere Stablinse (10') länger als die beiden äußeren Stablinsen (20, 30). Letztere liegen erfindungsgemäß Scheitel-an-Scheitel an der mittleren Verbundstablinse (10') an. Ein Abstandsrohr, das an der radialen Außenseite der einzelnen Linsen (10', 20, 30) diese beabstandet, ist somit nicht vorgesehen. Bei diesem wie den folgenden Ausführungsbeispielen sind alle Linsenelemente aus einem optisch homogenen Material und alle optisch wirksamen Flächen (1, 2, 3, 4, 5, 6, 7, 8) aller aufgewiesenen Stablinsen sphärisch. Dieses Ausführungsbeispiel bietet den Vorteil, dass die beiden äußeren Stablinsen (20, 30) einstückig und identisch gefertigt werden können und das mittlere Stablinsenhauptelement (11') auf einfache Weise mit den nach außen gewandten Linsenelementen (12', 13') der mittleren Linse (10') verbunden werden kann.

Das Ausführungsbeispiel eins kann beispielsweise gemäß nachstehender Tabelle ausgeführt sein:

| Fläche Nr. i | Radius | Abstand | Brechungsindex | Abbe'sche Zahl |
|---|---|---|---|---|
| Zwischenbild | Plan | 6,5 | Luft | |
| 1 | 34,7 | 52,0 | 1,62 | 36,4 |
| 2 | -34,7 | 0 | Luft | |
| 3 | 53,5 | 2,5 | 1,57 | 57,5 |
| 4 | -14, 8 | 46,0 | 1,62 | 36,4 |
| 5 | 14,8 | 2,5 | 1,57 | 57,5 |
| 6 | -53,5 | 0 | Luft | |
| 7 | 34,7 | 52,0 | 1,62 | 36,4 |
| 8 | -34,7 | 6,5 | Luft | |
| Zwischenbild | Plan | 0 | Luft | |

Dieses Ausführungsbeispiel kann als zweites Ausführungsbeispiel modifiziert werden, indem das mittlere symmetrische Stablinsenhauptelement bikonvex gefertigt wird und daran statt konvexen Linsenelementen Meniskuselemente gekittet werden. Das mittlere Stablinsenhauptelement kann hierbei vorteilhafterweise ähnlich oder gar gleich wie die äußeren Linsen gefertigt werden.

Gemäß einem dritten Ausführungsbeispiel ist es bei beiden genannten Ausführungsbeispielen auch möglich, die mittlere Linse (10') statt mit einer größeren Länge ungefähr gleich lang wie die äußeren Linsen (20, 30), z.B. mit 90% deren Länge, zu gestalten. Dies hat den Vorteil, dass die Vignettierung geringer ist, z.B. um einen vorgegebenen Prozentsatz, als wenn die mittlere Linse länger als die äußeren Linsen ist.

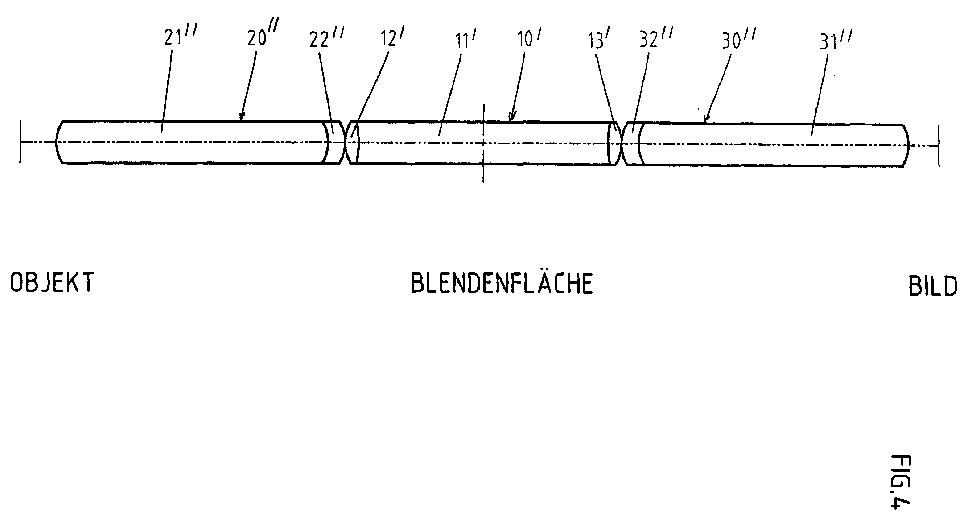

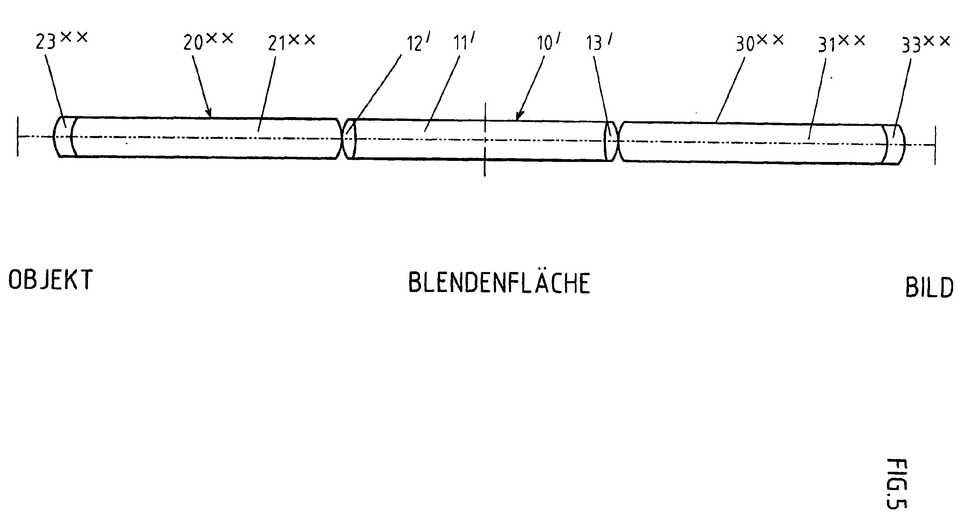

Weitere ähnliche Ausführungsbeispiele lassen sich als viertes Ausführungsbeispiel, illustriert durch Figuren 4, 5 und 6, von den obigen drei Ausführungsbeispielen ableiten, indem die äußeren Stablinsen (20", 30"; 20^{xx}, 30^{xx}; 20"^{xx}, 30"^{xx}) statt einstückig zu sein, ebenso wie die mittlere (10') als Verbundstablinsen (20", 30"; 20^{xx}, 30^{xx}; 20"^{xx}, 30"^{xx}) aufgebaut sind, das heißt, dass beide äußere Stablinsen (20", 30" ; 20^{xx}, 30^{xx}; 20"^{xx}, 30"^{xx}) symmetrisch zueinander bezüglich einer Mittelebene (100) des Bildübertragungssystems mit Linsenelementen (22", 32", 23^{xx}, 33^{xx}) auf der nach innen gewandten Seite und/oder der nach außen gewandten Seite verkittet sind. Diese Linsenelemente (22", 32", 23^{xx}, 33^{xx}) können je nachdem, ob das Stablinsenhauptelement (21", 31"; 21^{xx}, 31^{xx}; 21"^{xx}, 31"^{xx}) der äußeren Stablinsen bikonvex, bikonkav oder konvex-konkav ist, positive oder negative Meniskuselemente (22", 32", 23^{xx}, 33^{xx}) oder bikonvexe Linsenelemente sein. Durch diese Modifikationen lässt sich in vorteilhafter Weise - bei einem erhöhten Herstellungsaufwand - die Bildkrümmung verringern.

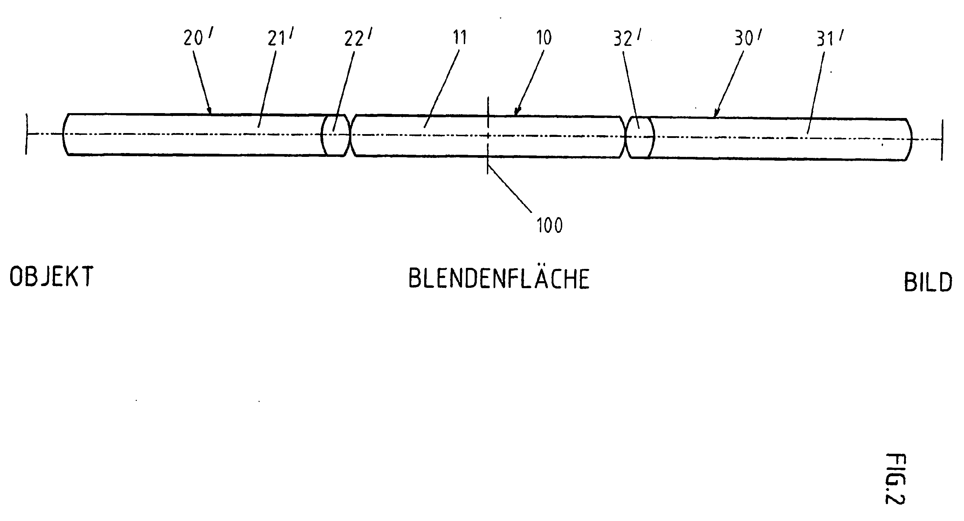

Gemäß einem fünften Ausführungsbeispiel wie in Fig. 2 dargestellt beinhaltet das Stablinsensystem neben einer mittleren Stablinse (10), die symmetrisch bezüglich ihrer zur optischen Achse senkrechten Mittelebene (100) ist, zwei äußere Verbundstablinsen (20', 30'), die zueinander symmetrisch bezüglich oben genannter Mittelebene (100) sind und deren Hauptelemente (21', 31') auf der nach außen gewandten Seite konvex und auf der nach innen gewandten Seite konkav sind. Die mittlere Stablinse (10) ist hier bikonvex und symmetrisch, jedoch unverkittet, also einstückig. Sie kann wie oben beschrieben im Wesentlichen gleich lang wie die äußeren Stablinsen (20', 30') sein oder etwas länger, gemäß einer bevorzugten Ausführungsform maximal 1,5 mal so lang wie die äußeren Stablinsen (20', 30'). An die beiden identischen äußeren Stablinsenhauptelemente (20', 30') ist auf der nach innen gewandten Seite jeweils ein bikonvexes Linsenelement (22', 32') gekittet. Auch hier liegen wie in allen folgenden Ausführungsbeispielen die beiden äußeren Verbundstablinsen (20', 30') an der mittleren Stablinse (10) Scheitel-an-Scheitel an, was Abstandshalter überflüssig macht. Ein Vorteil dieser Ausführungsform ist, dass hierbei an die Verbundlinsenhauptelemente (21', 31') jeweils nur einseitig ein Linsenelement (22', 32') gekittet wird, was insbesondere bezüglich Halterung des Hauptelements ein einfacherer Herstellungsvorgang ist.

Dieses Ausführungsbeispiel kann als ein sechstes Ausführungsbeispiel modifiziert werden, indem die äußeren Stablinsenhauptelemente bikonvex statt konvex-konkav gefertigt werden und daran statt konvexen Linsenelementen Meniskuselemente gekittet werden. Das mittlere Stablinsenhauptelement kann hierbei ähnlich oder gar gleich wie die äußeren Linsen gefertigt werden. Ein Vorteil dieser Ausführung liegt darin, dass die optisch wirksamen Flächen aller Stablinsen, d.h. der beiden Hauptelemente der äußeren Stablinsen und der mittleren Stablinse, konvex sind und gegebenenfalls identisch, d.h. gleich hergestellt werden können.

Bei den Ausführungsbeispielen fünf und sechs sind folgende Modifizierungen möglich:

Als Ausführungsbeispiel sieben kann das mittlere Stabelement (10') gemäß Fig. 4 anstatt einstückig zu sein, ebenso als Verbundstablinse (10') aufgebaut sein, und zwar sowohl als bikonvexes Stablinsenhauptelement mit beidseitig daran gekitteten positiven oder negativen Meniskuselementen als auch als bikonkaves Stablinsenhauptelement (10') mit beidseitig daran gekitteten Bikonvexlinsen (12', 13'). Ferner können als ein in Fig. 6 dargestelltes Ausführungsbeispiel acht bei den Ausführungsbeispielen fünf und sechs die äußeren Stablinsen (20"^{xx}, 30"^{xx}) neben den auf der nach innen gewandten Seite daran gekitteten Linsenelementen (22", 32") zusätzlich auf der nach außen gewandten Seite daran gekittete Linsenelemente (23^{xx}, 33^{xx}) aufweisen; diese nach außen gewandten Linsenelemente (23^{xx}, 33^{xx}) der äußeren Stablinsen (20"^{xx}, 30"^{xx}) können bikonvex sein, wenn die nach außen gewandte Seite der äußeren Stablinsenhauptelemente konkav ausgebildet ist, oder sie können auf der nach innen gewandten Seite konkav und auf der nach außen gewandten Seite konvex sein, also Meniskuselemente (23^{xx}, 33^{xx}), wenn die äußeren Stablinsenhautelemente (21"^{xx}, 31"^{xx}) auf ihrer nach außen gewandten Seite eine konvexe Krümmung aufweisen. Erfindungsgemäß sind die äußeren Stablinsen (20, 30; 20', 30'; 20'^{xx}, 30'^{xx}; 20", 30"; 20^{xx}, 30^{xx}; 20'^{xx}, 30"^{xx}) immer so aufgebaut, dass sie symmetrisch zueinander bezüglich einer zur optischen Achse senkrechten Mittelebene (100) des Bildübertragungssystems sind. Durch die Modifikationen der Ausführungsbeispiele sieben und acht lässt sich in vorteilhafter Weise die Bildkrümmung verringern.

In den obigen Ausführungsbeispielen können als ein Ausführungsbeispiel neun die Linsenhauptelemente der Verbundlinse oder Verbundlinsen sofern sie bikonvex oder -konkav sind, symmetrisch bezüglich ihrer zur optischen Achse senkrechten Mittelebene ausgeführt sein. Der Vorteil einer derartigen symmetrischen Ausführung liegt in einem besser zu vereinheitlichenden Herstellungsprozess.

Ebenso kann, was einem Ausführungsbeispiel zehn (ersichtlich in den Figuren 1, 4, 5 oder 6) entspricht, in den obigen Ausführungsbeispielen die mittlere Stablinse (10'), sofern sie als Verbundstablinse (10') ausgeführt ist, Enden aufweisen, die bezüglich einer durch die mittlere Stablinse (10') senkrecht zur optischen Achse verlaufenden Symmetrieebene (100) symmetrisch sind. Dabei sind vorteilhafterweise die Enden der Linsenelemente (10') vereinheitlicht.

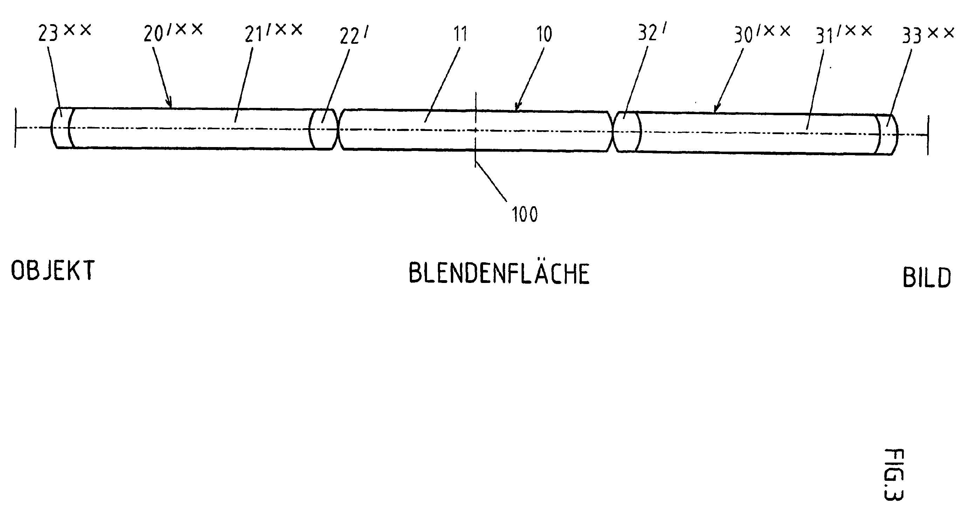

Bei einem Ausführungsbeispiel elf (ersichtlich in den Figuren 1, 2, 3, 4, 5 oder 6) können die an das Hauptelement gekitteten Linsenelemente (12', 13'; 22', 32'; 22', 23^{xx}, 32', 33^{xx}; 22", 12', 13', 32"; 23^{xx}, 12', 13', 33^{xx}; 23^{xx}, 22", 12', 13', 32", 33^{xx}) bezüglich vorstehend genannter Symmetrieebene (100) auch als ganzes symmetrisch zueinander sein, was einen Vorteil durch weitere Vereinheitlichung eben der gesamten Linsenelemente bedeutet.

Bei den genannten Ausführungsformen mit einer mittleren Verbundlinse (ersichtlich in den Figuren 1, 4, 5 oder 6), kann gemäß einem Ausführungsbeispiel zwölf diese Verbundlinse (10') als Verbund zwischen dem Stablinsenhauptelement (11') und den daran gekitteten Linsenelementen (12', 13') als ein Zylinder (10') ausgebildet sein.

In einem Ausführungsbeispiel dreizehn (ersichtlich in den Figuren 2 bis 6) sind bei den oben angeführten Ausführungsbeispielen mit äußeren Verbundstablinsen (20', 30', 20'^{xx}, 30'^{xx}; 20", 30"; 20^{xx}, 30^{xx}; 20"^{xx}, 30"^{xx}) diese als Zylinder ausgebildet (20', 30', 20'^{xx}, 30'^{xx}; 20", 30"; 20^{xx}, 30^{xx}; 20"^{xx}, 30"^{xx}).

Weitere Abänderungen sind dergestalt möglich, dass an bestimmten Enden eines oder mehrerer Verbundlinsenstabhauptelemente statt einem Linsenelement (12', 13'; 22', 32'; 22', 23^{xx}, 32', 33^{xx}; 22", 12', 13', 32"; 23^{xx}, 12', 13', 33^{xx}; 23^{xx}, 22", 12', 13', 32", 33^{xx}) auch eine Mehrzahl von Linsenelementen gekittet sein kann. Zum Beispiel ist ein Ausführungsbeispiel dreizehn anzuführen, das dem Ausführungsbeispiel eins entspricht, wobei allerdings zusätzlich zu den an das Linsenhauptelement (11') der mittleren Stablinse (10') auf der nach außen gewandten Seite gekitteten Bikonvexlinsenelementen (12', 13') auf der nach außen gewandten Seite an diese noch Meniskuselemente gekittet sind. Hier ergibt sich als Vorteil, dass die Bildkrümmung verringert werden kann.

Ergänzend zu den dargestellten und beschriebenen Ausführungsbeispielen wird darauf hingewiesen, dass selbstverständlich jederzeit optisch nicht wirksame Flächen, insbesondere Planflächen, in das Bildübertragungssystem eingefügt werden können, ohne den Rahmen der Erfindung zu verlassen. Damit können die einzelnen Linsen auch aus noch mehr Elementen als in den obigen Ausführungsbeispielen aufgebaut sein. Die notwendigen Anpassungen der Daten der jeweils zusätzlichen Linsenelemente bei der Verwendung von Linsen aus noch mehr Elementen können in bekannter Weise mit handelsüblichen Optik-Design-Programmen erfolgen.

## Patentansprüche

1. Bildübertragungssystem für starre Endoskope und dgl. Sehrohre mit einer mittleren Stablinse (10') und zwei äußeren Stablinsen (20, 30; 20", 30"; 20^{xx}, 30^{xx}; 20"^{xx}, 30"^{xx}), die bezüglich einer zur optischen Achse senkrechten Mittelebene (100) des Bildübertragungssystems zueinander symmetrisch sind, wobei
- alle Linsenelemente (11', 12', 13', 21, 31; 32'; 23^{xx}, 21'^{xx}, 31'^{xx}, 33^{xx}; 21 ", 22", 31", 32") aus jeweils optisch homogenem Material bestehen,
- alle optisch wirksamen Flächen (1, 2, 3, 4, 5, 6, 7, 8) sphärisch sind,
- die mittlere Stablinse (10') aus einem Stablinsenhauptelement (11') und beidseitig daran gekitteten Linsenelementen (12', 13') besteht, so dass sich daraus eine bikonvexe Verbundstablinse (10') ergibt, und
- die äußeren Stablinsen (20, 30; 20", 30"; 20^{xx}, 30^{xx}; 20"^{xx}, 30"^{xx}) bikonvex sind,
**dadurch gekennzeichnet, dass**
- die Stablinsen (10'; 20, 30; 20", 30"; 20^{xx}, 30^{xx}; 20"^{xx}, 30"^{xx}) Scheitel-an-Scheitel aneinander anliegen und
- die mittlere Stablinse (10') im Wesentlichen gleich lang wie oder länger als die äußeren Stablinsen (20, 30; 20", 30' ; 20^{xx}, 30^{xx}; 20"^{xx}, 30"^{xx}) ist.

2. Bildübertragungssystem für starre Endoskope und dgl. Sehrohre mit einer mittleren Stablinse (10; 10') und zwei äußeren Stablinsen (20', 30'; 20'^{xx}, 30'^{xx}; 20", 30"; 20^{xx}, 30^{xx}; 20"^{xx}, 30''^{xx}), die bezüglich einer zur optischen Achse senkrechten Mittelebene (100) des Bildübertragungssystems zueinander symmetrisch sind, wobei
- alle Linsenelemente (11, 21', 22', 31'; 32'; 23^{xx}, 21'^{xx}, 31'^{xx}, 33^{xx}; 11', 12', 13', 21", 22", 31", 32") aus jeweils optisch homogenem Material bestehen,
- alle optisch wirksamen Flächen (1, 2, 3, 4, 5, 6, 7, 8) sphärisch sind,
- die äußeren Stablinsen (20', 30'; 20'^{xx}, 30'^{xx} ; 20", 30"; 20^{xx}, 30^{xx}; 20"^{xx}, 30"^{xx}) bikonvex sind und
- die mittlere Stablinse (10; 10') bikonvex ist,
**dadurch gekennzeichnet, dass**
- die äußeren Stablinsen (20', 30'; 20'^{xx}, 30'^{xx}; 20", 30"; 20^{xx}, 30^{xx}; 20"^{xx}, 30"^{xx}) aus Stablinsenhauptelementen (21', 31'; 21'^{xx}, 31'^{xx}; 21", 31"; 21^{xx}, 31^{xx}; 21"^{xx}, 31"^{xx}) und auf der nach innen gewandten Seite daran gekitteten Linsenelementen (22', 32'; 22', 32', 23^{xx}, 33^{xx}; 22", 32"; 23^{xx}, 33^{xx}) bestehen, so dass sich daraus bikonvexe Verbundstablinsen (20', 30'; 20'^{xx}, 30'^{xx}; 20", 30"; 20^{xx}, 30^{xx}; 20"^{xx}, 30"^{xx}) ergeben,
- die Stablinsen (10, 20', 30'; 10, 20'^{xx}, 30'^{xx}; 10', 20", 30"; 10' 20^{xx},30^{xx}; 10', 20"^{xx}, 30"^{xx}) Scheitel-an-Scheitel aneinander anliegen und
- die mittlere Stablinse (10; 10') im Wesentlichen gleich lang wie oder länger als die äußeren Stablinsen (20', 30'; 20^{'xx}, 30'^{xx} ; 20", 30"; 20^{xx}, 30^{xx}; 20"^{xx}, 30"^{xx}) ist.
- die mittlere Stablinse (10; 10') im Wesentlichen gleich lang wie oder länger als die äußeren Stablinsen (20', 30'; 20'^{xx}, 30'^{xx}; 20", 30"; 20^{xx}, 30^{xx}; 20"^{xx}, 30''^{xx}) ist.

3. Bildübertragungssystem für starre Endoskope und dgl. Sehrohre nach Patentanspruch 1, **dadurch gekennzeichnet, dass**
- das Stablinsenhauptelement (11') eine Bikonkavlinse ist und
die daran gekitteten Linsenelemente (12', 13') Bikonvexlinsen sind.

4. Bildübertragungssystem für starre Endoskope und dgl. Sehrohre nach Patentanspruch 2, **dadurch gekennzeichnet, dass**
- die Stablinsenhauptelemente (21', 31'; 21^{xx}, 31'^{xx}; 21", 31"; 21^{xx}, 31^{xx}; 21"^{xx}, 31"^{xx}) auf der nach außen gewandten Seite konvexe und auf der nach innen gewandten Seite konkave Linsen sind und
- die auf der nach innen gewandten Seite daran gekitteten Linsenelemente (22', 32'; 22', 32', 23^{xx}, 33^{xx}; 22", 32"; 23^{xx}, 33^{xx}) Bikonvexlinsen sind.

5. Bildübertragungssystem für starre Endoskope und dgl. Sehrohre nach einem der Patentansprüche 1 oder 2, **dadurch gekennzeichnet, dass**
- die Stablinsenhauptelemente (11'; 21', 31'; 21'^{xx}, 31'^{xx}; 21", 31"; 21^{xx}, 31^{xx}; 21^{"xx}, 31^{"xx}) Bikonvexlinsen sind und
- die daran gekitteten Linsenelemente (23^{xx}, 33^{xx}; 22", 32") Meniskuselemente sind.

6. Bildübertragungssystem für starre Endoskope und dgl. Sehrohre nach Patentanspruch 5, **dadurch gekennzeichnet, dass**
- die Meniskuselemente (23^{xx}, 33^{xx}; 22", 32") positive Meniskuselemente sind.

7. Bildübertragungssystem für starre Endoskope und dgl. Sehrohre nach Patentanspruch 5, **dadurch gekennzeichnet, dass**
- die Meniskuselemente (23^{xx}, 33^{xx}; 22", 32") negative Meniskuselemente sind.

8. Bildübertragungssystem für starre Endoskope und dgl. Sehrohre nach einem der vorstehenden Patentansprüche, **dadurch gekennzeichnet, dass**
- die Länge der mittleren Stablinse (10; 10') im Wesentlichen der der äußeren Stablinsen (20', 30'; 20^{'xx}, 30^{'xx}; 20", 30"; 20^{xx}, 30^{xx}; 20^{"xx}, 30^{''xx}) entspricht.

9. Bildübertragungssystem für starre Endoskope und dgl. Sehrohre nach einem der vorstehenden Patentansprüche, **dadurch gekennzeichnet, dass**
- die Stablinsenhauptelemente (11', 21, 31; 11; 11'; 21", 31"; 11', 21^{xx}, 31^{xx}; 11', 21"^{xx}, 31"^{xx}) symmetrisch bezüglich ihrer zur optischen Achse senkrechten Mittelebene sind.

10. Bildübertragungssystem für starre Endoskope und dgl. Sehrohre nach einem der vorstehenden Patentansprüche, **dadurch gekennzeichnet, dass**
- die Stablinsenhauptelemente (11', 21, 31; 11, 21', 31'; 11', 21'^{xx}, 31'^{xx}; 21", 31"; 11', 21^{xx}, 31^{xx}; 11', 21"^{xx}, 31"^{xx}) bezüglich ihrer zur optischen Achse senkrechten Mittelebene unsymmetrisch sind.

11. Bildübertragungssystem für starre Endoskope und dgl. Sehrohre nach einem der vorstehenden Patentansprüche, **dadurch gekennzeichnet, dass**
- die mittlere Stablinse (10; 10') bezüglich einer durch die mittlere Stablinse (10; 10') senkrecht zur optischen Achse verlaufenden Symmetrieebene (100) symmetrische Enden (3, 6) aufweist.

12. Bildübertragungssystem für starre Endoskope und dgl. nach einem der vorstehenden Patentansprüche, sofern er nicht von Patentanspruch 2 abhängig ist, **dadurch gekennzeichnet, dass**
- die mittlere Verbundstablinse (10) symmetrisch bezüglich einer durch die mittlere Stablinse (10) senkrecht zur optischen Achse verlaufenden Symmetrieebene (100) ist.

13. Bildübertragungssystem für starre Endoskope und dgl. Sehrohre nach einem der vorstehenden Patentansprüche, **dadurch gekennzeichnet, dass**
- die an die Stablinsenhauptelemente (11'; 21', 31'; 21'^{xx}, 31'^{xx}; 21", 31"; 21^{xx}, 31^{xx}; 21"^{xx}, 31^{"xx}) gekitteten Linsenelemente (12', 13'; 22', 32'; 22', 32', 23^{xx}, 33^{xx}; 22", 32"; 23^{xx}, 33^{xx}) bezüglich einer durch die mittlere Stablinse (10; 10') senkrecht zur optischen Achse verlaufenden Symmetrieebene (100) zueinander symmetrisch sind.

14. Bildübertragungssystem für starre Endoskope und dgl. Sehrohre nach einem der vorstehenden Patentansprüche, sofern er nicht von Patentanspruch 2 abhängig ist, **dadurch gekennzeichnet, dass**
- das Stablinsenhauptelement (11') der mittleren Stablinse (10') und die daran gekitteten Linsenelemente (12', 13') die mittlere Stablinse (10') als einen Zylinder ausbilden.

15. Bildübertragungssystem für starre Endoskope und dgl. Sehrohre nach einem der vorstehenden Patentansprüche, sofern er nicht von Patentanspruch 2 abhängig ist, **dadurch gekennzeichnet, dass**
- die Stablinsenhauptelemente (21', 31'; 21^{'xx}, 31^{'xx} ; 21", 31"; 21^{xx}, 31^{xx}; 21^{''xx}, 31^{"xx}) der äußeren Stablinsen (20', 30'; 20^{'xx}, 30^{'xx} ; 20", 30"; 20^{xx}, 30^{xx}; 20^{"xx}, 30^{"xx}) und die daran gekitteten Linsenelemente (22', 32'; 23^{xx}, 22', 33^{xx}, 32'; 22, 32"; 23^{xx}, 33^{xx}; 23^{xx}, 33^{xx}, 22", 32") die äußeren Stablinsen (20', 30'; 20^{'xx}, 30^{'xx}; 20", 30"; 20^{xx}, 30^{xx}; 20^{"xx}, 30^{"xx}) als Zylinder ausbilden.

16. Bildübertragungssystem für starre Endoskope und dgl. Sehrohre nach einem der vorstehenden Patentansprüche, sofern er nicht von Patentanspruch 1 abhängig ist, **dadurch gekennzeichnet, dass**
- keine Abstandsrohre zwischen den Stablinsen (10; 10'; 20, 30; 20', 30'; 20'^{xx}, 30'^{xx}; 20", 30"; 20^{xx}, 30^{xx}; 20"^{xx}, 30"^{xx}) verwendet werden.

17. Bildübertragungssystem für starre Endoskope und dgl. Sehrohre nach einem der vorstehenden Patentansprüche, sofern er nicht von Patentanspruch 2 abhängig ist, **dadurch gekennzeichnet, dass**
- die äußeren Stablinsen (20, 30) einstückig sind.

18. Bildübertragungssystem für starre Endoskope und dgl. Sehrohre nach einem der Patentansprüche 1 bis 16, **dadurch gekennzeichnet, dass**
- die äußeren Stablinsen (20', 30'; 20'^{xx}, 30'^{xx}; 20", 30", 20^{xx}, 30^{xx}; 20", 30"; 20"^{xx}, 30"^{xx}) Verbundstablinsen sind, die Stablinsenhauptelemente (21', 31'; 21'^{xx}, 31'^{xx}; 21", 31", 21^{xx}, 31^{xx}; 21", 31"; 21"^{xx}, 31"^{xx}) und auf der nach innen gewandten Seite daran gekittete Linsenelemente (22', 32'; 22", 32") aufweisen, so dass die sich daraus ergebenden Verbundstablinsen (20', 30'; 20'^{xx}, 30'^{xx}; 20", 30", 20^{xx}, 30^{xx}; 20", 30"; 20"^{xx}, 30"^{xx}) bikonvex sind.

19. Bildübertragungssystem für starre Endoskope und dgl. Sehrohre nach einem der Patentansprüche 1 bis 16 oder 18, **dadurch gekennzeichnet, dass**
- die äußeren Stablinsen (20'^{xx}, 30'^{xx}; 20", 30"; 20^{xx}, 30^{xx}; 20"^{xx}, 30"^{xx}) Verbundstablinsen sind, die Stablinsenhauptelemente (21'^{xx}, 31'^{xx}; 21", 31"; 21"^{xx}, 31"^{xx}) und auf der nach außen gewandten Seite daran gekittete Linsenelemente (23^{xx}, 33^{xx}) aufweisen, so dass die sich daraus ergebenden Verbundstablinsen (20', 30'; 20'^{xx}, 30'^{xx}; 20", 30"; 20^{xx}, 30^{xx}; 20"^{xx}, 30"^{xx}) bikonvex sind.

20. Bildübertragungssystem für starre Endoskope und dgl. Sehrohre nach einem der Patentansprüche 2 bis 18, sofern er nicht von Patentanspruch 1 abhängig ist, **dadurch gekennzeichnet, dass**
- die mittlere Stablinse (10) einstückig ist.

21. Bildübertragungssystem für starre Endoskope und dgl. Sehrohre nach einem der Patentansprüche 2 bis 18, sofern er nicht von Patentanspruch 1 abhängig ist, **dadurch gekennzeichnet, dass**
- die mittlere Stablinse (10') eine Verbundstablinse ist, die ein Stablinsenhauptelement (11') und auf der nach außen gewandten Seite daran gekittete Linsenelemente (1', 13') aufweist, so dass die sich daraus ergebende Verbundstablinse (10') bikonvex ist.

22. Bildübertragungssystem für starre Endoskope und dgl. Sehrohre nach einem der vorstehenden Patentansprüche, sofern er nicht von Patentanspruch 1 abhängig ist, **dadurch gekennzeichnet, dass**
- eines oder mehrere der Linsenhauptelemente mit einer Mehrzahl auf der nach außen gewandten Seite daran bzw. aneinander gekitteter Linsenelemente versehen sein können.

## Claims

1. Image transmission system for rigid endoscopes and such periscopes, having a middle rod lens (10') and two outer rod lenses (20, 30; 20", 30"; 20^{xx}, 30^{xx}; 2"^{xx}, 30"^{xx}) which are symmetrical to one another with reference to a middle plane (100), perpendicular to the optical axis, of the image transmission system,
- all the lens elements (11', 12', 13', 21, 31; 32'; 23^{xx}, 21'^{xx}, 31'^{xx}, 33^{xx}; 21", 22", 31", 32") consisting in each case of optically homogeneous material,
- all the optically active surfaces (1, 2, 3, 4, 5, 6, 7, 8) being spherical,
- the middle rod lens (10') consisting of a main rod lens element (11') and lens elements (12', 13') cemented thereon on either side, such that a biconvex composite rod lens (10') results therefrom, and
- the outer rod lenses (20, 30; 20", 30"; 20^{xx}, 30^{xx}; 20"^{xx}, 30"^{xx}) being biconvex,
**characterized in that**
- the rod lenses (10'; 20, 30; 20", 30"; 20^{xx}, 30^{xx}; 20"^{xx}, 30"^{xx}) bear against one another apex-to-apex, and
- the middle rod lens (10') is essentially of the same length as or longer than the outer rod lenses (20, 30; 20", 30"; 20^{xx,} 30^{xx}; 20"^{xx}, 30"^{xx}) .

2. Image transmission system for rigid endoscopes and such periscopes, having a middle rod lens (10; 10') and two outer rod lenses (20', 30' ; 20'^{xx}, 30'^{xx}, 20", 30"; 20^{xx}, 30^{xx}; 20"^{xx}, 30"^{xx}) which are symmetrical to one another with reference to a middle plane (100), perpendicular to the optical axis, of the image transmission system,
- all the lens elements (11, 21', 22', 31'; 32'; 23^{xx}, 21'^{xx}, 31'^{xx}, 33^{xx}; 11', 12', 13', 21", 22", 31", 32") consisting in each case of optically homogeneous material,
- all the optically active surfaces (1, 2, 3, 4, 5, 6, 7, 8) being spherical,
- the outer rod lenses (20', 30'; 20'^{xx}, 30'^{xx}; 20", 30"; 20^{xx}, 30^{xx}; 20"^{xx}, 30"^{xx}) being biconvex, and
- the middle rod lens (10; 10') being biconvex,
**characterized in that**
- the outer rod lenses (20', 30'; 20'^{xx}, 30'^{xx}; 20", 30"; 20^{xx}, 30^{xx}; 20"^{xx}, 30"^{xx}) consist of main rod lens elements (21', 31'; 21'^{xx}, 31'^{xx}; 21", 31"; 21^{xx}, 31^{xx}; 21"^{xx}, 31"^{xx}) and lens elements (22', 32'; 22', 32', 23^{xx}, 33^{xx}; 22", 32"; 23^{xx}, 33^{xx}) cemented thereon on the side facing inwards, such that biconvex composite rod lenses (20', 30'; 20'^{xx}, 30'^{xx}; 20", 30"; 20^{xx}, 30^{xx}; 20"^{xx}, 30"^{xx}) result therefrom,
- the rod lenses (10, 20', 30'; 10, 20'^{xx}, 30'^{xx}; 10', 20", 30"; 10', 20^{xx}, 30^{xx}; 10', 20"^{xx}, 30"^{xx}) bear against one another apex-to-apex, and
- the middle rod lens (10; 10') is essentially of the same length as or longer than the outer rod lenses (20', 30'; 20'^{xx}, 30''^{xx}; 20", 30"; 20^{xx}, 30^{xx}; 20"^{xx}, 30"^{xx}).

3. Image transmission system for rigid endoscopes and such periscopes according to Patent Claim 1, **characterized in that**
- the main rod lens element (11') is a biconcave lens and the lens elements (12', 13') cemented thereon are biconvex lenses.

4. Image transmission system for rigid endoscopes and such periscopes according to Patent Claim 2, **characterized in that**
- the main rod lens elements (21', 31'; 21'^{xx}, 31'^{xx}; 21", 31"; 21^{xx}, 31^{xx}; 21"^{xx}, 31"^{xx}) are convex lenses on the side facing outwards and concave lenses on the side facing inwards, and
- the lens elements (22' 32'; 22', 32', 23^{xx}, 33^{xx}; 22", 32"; 23^{xx}, 33^{xx}) cemented thereon on the side facing inwards are biconvex lenses.

5. Image transmission system for rigid endoscopes and such periscopes according to either of Patent Claims 1 and 2, **characterized in that**
- the main rod lens elements (11'; 21', 31'; 21'^{xx}, 31'^{xx}; 21", 31"; 21^{xx}, 31^{xx}; 21"^{xx}, 31"^{xx}) are biconvex lenses, and
- the lens elements (23^{xx} 33^{xx}; 22", 32") cemented thereon are meniscus elements.

6. Image transmission system for rigid endoscopes and such periscopes according to Patent Claim 5, **characterized in that**
- the meniscus elements (23^{xx}, 33^{xx}; 22", 32") are positive meniscus elements.

7. Image transmission system for rigid endoscopes and such periscopes according to Patent Claim 5, **characterized in that**
- the meniscus elements (23^{xx}, 33^{xx}; 22", 32") are negative meniscus elements.

8. Image transmission system for rigid endoscopes and such periscopes according to one of the preceding patent claims, **characterized in that**
- the length of the middle rod lens (10; 10') corresponds substantially to that of the outer rod lenses (20', 30'; 20^{'xx}, 30^{'xx}; 20", 30"; 20^{xx}, 30^{xx}; 20^{"xx}, 30^{"xx}).

9. Image transmission system for rigid endoscopes and such periscopes according to one of the preceding patent claims, **characterized in that**
- the main rod lens elements (11', 21, 31; 11; 11'; 21", 31"; 11', 21^{xx}, 31^{xx}; 11', 21"^{xx}, 31"^{xx}) are symmetrical with reference to their middle plane perpendicular to the optical axis.

10. Image transmission system for rigid endoscopes and such periscopes according to one of the preceding patent claims, **characterized in that**
- the main rod lens elements (11', 21, 31; 11, 21', 31'; 11' , 21^{'xx}, 31^{'xx}; 21", 31"; 11', 21^{xx}, 31^{xx}; 11', 21^{"xx}, 31"^{xx}) are asymmetric with reference to their middle plane perpendicular to the optical axis.

11. Image transmission system for rigid endoscopes and such periscopes according to one of the preceding patent claims, **characterized in that**
- the middle rod lens (10; 10') has symmetrical ends (3, 6) with reference to a plane of symmetry (100) running through the middle rod lens (10; 10') perpendicular to the optical axis.

12. Image transmission system for rigid endoscopes and such periscopes according to one of the preceding patent claims, if it is not dependent on Patent Claim 2, **characterized in that**
- the middle composite rod lens (10) is symmetrical with reference to a plane of symmetry (100) running through the middle rod lens (10) perpendicular to the optical axis.

13. Image transmission system for rigid endoscopes and such periscopes according to one of the preceding patent claims, **characterized in that**
- the lens elements (12', 13'; 22', 32'; 22', 32', 23^{xx}, 33^{xx}; 22", 32"; 23^{xx}, 33^{xx}) cemented on the main rod lens elements (11'; 21 , 31'; 21'^{xx}, 31'^{xx}; 21", 31"; 21^{xx}, 31^{xx}; 21"^{xx}, 31"^{xx}) are symmetrical to one another with reference to a plane of symmetry (100) running through the middle rod lens (10; 10') perpendicular to the optical axis.

14. Image transmission system for rigid endoscopes and such periscopes according to one of the preceding patent claims, if it is not dependent on Patent Claim 2, **characterized in that**
- the main rod lens element (11') of the middle rod lens (10') and the lens elements (12', 13') cemented thereon form the middle rod lens (10') as a cylinder.

15. Image transmission system for rigid endoscopes and such periscopes according to one of the preceding patent claims, if it is not dependent on Patent Claim 2, **characterized in that**
- the main rod lens elements (21', 31'; 21^{'xx}, 31'^{xx}; 21", 31"; 21^{xx}, 31^{xx}; 21^{"xx}, 31^{"xx}) of the outer rod lenses (20', 30'; 20^{'xx}, 30'^{xx}; 20", 30"; 20^{xx}, 30^{xx}; 20^{"xx}, 30^{"xx}) and the lens elements (22', 32'; 23^{xx}, 22' , 33^{xx}, 32'; 22, 32"; 23^{xx}, 33^{xx}; 23^{xx}, 33^{xx}, 22", 32") cemented thereon form the outer rod lenses (20', 30'; 20'^{xx}, 30'^{xx}; 20", 30"; 20^{xx}, 30^{xx}; 20^{"xx}, 30^{"xx}) as cylinders.

16. Image transmission system for rigid endoscopes and such periscopes according to one of the preceding patent claims, if it is not dependent on Patent Claim 1, **characterized in that**
- no spacing tubes are used between the rod lenses (10; 10'; 20, 30; 20' , 30' ; 20'^{xx}, 30'^{xx}; 20", 30"; 20^{xx}, 30^{xx}; 20"^{xx}, 30"^{xx}).

17. Image transmission system for rigid endoscopes and such periscopes according to one of the preceding patent claims, if it is not dependent on Patent Claim 2, **characterized in that**
- the outer rod lenses (20, 30) are unipartite.

18. Image transmission system for rigid endoscopes and such periscopes according to one of Patent Claims 1 to 16, **characterized in that**
- the outer rod lenses (20', 30'; 20^{'xx}, 30^{'xx}; 20", 30", 20^{xx}, 30^{xx}; 20", 30"; 20^{"xx}, 30^{"xx}) are composite rod lenses which have main rod lens elements (21', 31'; 21'^{xx}, 31'^{xx}; 21", 31", 21^{xx}, 31^{xx}; 21", 31"; 21"^{xx}, 31"^{xx}) and lens elements (22', 32'; 22", 32") cemented thereon on the side facing inwards, such that the composite rod lenses (20', 30'; 20'^{xx}, 30'^{xx}; 20", 30", 20^{xx}, 30^{xx}; 20", 30"; 20"^{xx}, 30"^{xx}) resulting therefrom are biconvex.

19. Image transmission system for rigid endoscopes and such periscopes according to one of Patent Claims 1 to 16 or 18, **characterized in that**
- the outer rod lenses (20'^{xx}, 30'^{xx}; 20", 30"; 20^{xx}, 30^{xx}; 20"^{xx}, 30"^{xx}) are composite rod lenses which have main rod lens elements (21'^{xx}, 31'^{xx}; 21", 31"; 21"^{xx}, 31"^{xx}) and lens elements (23^{xx}, 33^{xx}) cemented thereon on the side facing outwards, such that the composite rod lenses (20', 30'; 20'^{xx}, 30'^{xx}; 20", 30"; 20^{xx}, 30^{xx}; 20"^{xx}, 30"^{xx}) resulting therefrom are biconvex.

20. Image transmission system for rigid endoscopes and such periscopes according to one of Patent Claims 2 to 18, if it is not dependent on Patent Claim 1, **characterized in that**
- the middle rod lens (10) is unipartite.

21. Image transmission system for rigid endoscopes and such periscopes according to one of Patent Claims 2 to 18, if it is not dependent on Patent Claim 1, **characterized in that**
- the middle rod lens (10') is a composite rod lens which has a main rod lens element (11') and lens elements (1', 13') cemented thereon on the side facing outwards, such that the composite rod lens (10') resulting therefrom is biconvex.

22. Image transmission system for rigid endoscopes and such periscopes according to one of the preceding patent claims, if it is not dependent on Patent Claim 1, **characterized in that**
- one or more of the main lens elements can be provided with a plurality of lens elements cemented thereon and/or on one another on the side facing outwards.

## Revendications

1. Système de transmission d'images pour endoscopes rigides et tubes visuels similaires, comprenant une lentille barreau médiane (10') et deux lentilles barreau extérieures (20, 30 ; 20", 30" ; 20^{xx}, 30^{xx}, 20"^{xx}, 30"^{xx}) qui, par rapport à un plan médian (100) perpendiculaire à l'axe optique du système de transmission d'images, sont symétriques l'une par rapport à l'autre, dans lequel
- tous les éléments de lentille (11', 12', 13', 21, 31 ; 32' ; 23^{xx}, 21'^{xx}, 31'^{xx}, 33^{xx}, 21", 22", 31", 32") sont composés respectivement de matière homogène au niveau optique,
- toutes les surfaces actives au niveau optique (1, 2, 3, 4, 5, 6, 7, 8) sont sphériques,
- la lentille barreau médiane (10') est composée d'un élément principal de lentille barreau (11') et d'éléments de lentilles (12', 13') mastiqués dessus des deux côtés, de sorte qu'il en résulte une lentille barreau composite biconvexe (10') et
- les lentilles barreau extérieures (20, 30 ; 20", 30'' ; 20^{xx}, 30^{xx} ; 20"^{xx}, 30"^{xx}) sont biconvexes,
**caractérisé en ce que**
- les lentilles barreau (10' ; 20, 30 ; 20", 30" ; 20^{xx}, 30^{xx} ; 20"^{xx}, 30"^{xx}) reposent les unes sur les autres sommet sur sommet et
- la lentille barreau médiane (10') est pour l'essentiel de la même longueur ou plus longue que les lentilles barreau extérieures (20, 30 ; 20", 30" ; 20^{xx}, 30^{xx} ; 20"^{xx}, 30''^{xx},).

2. Système de transmission d'images pour endoscopes rigides et tubes visuels similaires, comprenant une lentille barreau médiane (10 ; 10') et deux lentilles barreau extérieures (20', 30' ; 20'^{xx}, 30'^{xx} ; 20'' , 30" ; 20^{xx}, 30^{xx} ; 20" ^{xx}, 30"^{xx}) qui, par rapport à un plan médian (100) perpendiculaire à l'axe optique du système de transmission d'images, sont symétriques l'une par rapport à l'autre, dans lequel
- tous les éléments de lentille (11, 21', 22', 31', 32' ; 23^{xx}, 21'^{xx}, 31'^{xx}, 33^{xx} ; 11' , 12', 13' , 21", 22" , 31", 32") sont composés respectivement de matière homogène au niveau optique,
- toutes les surfaces actives au niveau optique (1, 2, 3, 4, 5, 6, 7, 8) sont sphériques,
- les lentilles barreau extérieures (20', 30' ; 20'^{xx}, 30'^{xx}; 20'', 30", 20^{xx}, 30^{xx}; 20''^{xx}, 30''^{xx}) sont biconvexes,
- la lentille barreau médiane (10 ; 10') est biconvexe,
**caractérisé en ce que**
- les lentilles barreau extérieures (20', 30' ; 20^{'xx}, 30^{'xx}; 20'', 30'' ; 20^{xx}, 30^{xx} ; 20^{''xx}, 30^{"xx},) sont composées d'éléments principaux de lentille barreau (21', 31' ; 21^{'xx}, 31^{'xx} ; 21'', 31'' ; 21^{xx}, 31^{xx} ; 21^{''xx}, 31^{''xx},) et d'éléments de lentille (22', 32', 22', 32' ; 23^{xx}, 33^{xx}; 22'', 32'' ; 23^{xx}, 33^{xx}) mastiqués dessus sur le côté tourné vers l'intérieur, de sorte qu'il en résulte des lentilles barreau composites biconvexes (20', 30' ; 20^{'xx}, 30^{'xx}; 20'', 30'' ; 20^{xx}, 30^{xx} ; 20^{''xx}, 30^{''xx}),
- les lentilles barreau (10, 20', 30' ; 10, 20^{'xx}, 30^{'xx} ; 10', 20'', 30'' ; 10' , 20^{xx}, 30^{xx} ; 10', 20^{''xx}, 30^{''xx},) reposent les unes sur les autres sommet sur sommet et
- la lentille barreau médiane (10 ; 10') est pour l'essentiel de la même longueur ou plus longue que les lentilles barreau extérieures (20' , 30' ; 20'^{xx}, 30'^{xx} ; 20'', 30" ; 20^{xx}, 30^{xx} ; 20"^{xx}, 30"^{xx},).

3. Système de transmission d'images pour endoscopes rigides et tubes visuels similaires selon la revendication 1 du brevet, **caractérisé en ce que**
- l'élément principal de lentille barreau (11') est une lentille biconcave et que les éléments de lentille mastiqués dessus (12', 13') sont des lentilles biconvexes.

4. Système de transmission d'images pour endoscopes rigides et tubes visuels similaires selon la revendication 2 du brevet, **caractérisé en ce que**
- les éléments principaux de lentille barreau (21', 31' ; 21'^{xx}, 31'^{xx} ; 21'', 31'' ; 21^{xx}, 31^{xx} ; 21''^{xx}, 31''^{xx}) sont des lentilles convexes sur le côté tourné vers l'extérieur et concaves sur le côté tourné vers l'intérieur et
- les éléments de lentille (22', 32' ; 22', 32' , 23^{xx}, 33^{xx} ; 22'', 32''; 23^{xx}, 33^{xx}) mastiqués dessus sur le côté tourné vers l'intérieur sont des lentilles biconvexes.

5. Système de transmission d'images pour endoscopes rigides et tubes visuels similaires selon une des revendications 1 ou 2 du brevet, **caractérisé en ce que**
- les éléments principaux de lentille barreau (11' ; 21', 31' ; 21'^{xx}, 31'^{xx}; 21'' , 31'' ; 21^{xx}, 31^{xx}; 21"^{xx}, 31''^{xx}) sont des lentilles biconvexes et
- les éléments de lentille (23^{xx}, 33^{xx}; 22", 32") mastiqués dessus sont des éléments de ménisque.

6. Système de transmission d'images pour endoscopes rigides et tubes visuels similaires selon la revendication 5 du brevet, **caractérisé en ce que**
- les éléments de ménisque (23^{xx}, 33^{xx} ; 22", 32") sont des éléments de ménisque positifs.

7. Système de transmission d'images pour endoscopes rigides et tubes visuels similaires selon la revendication 5 du brevet, **caractérisé en ce que**
- les éléments de ménisque (23^{xx}, 33^{xx} ; 22", 32") sont des éléments de ménisque négatifs.

8. Système de transmission d'images pour endoscopes rigides et tubes visuels similaires selon une des revendications précédentes du brevet, **caractérisé en ce que**
- la longueur de la lentille barreau médiane (10 ; 10') équivaut pour l'essentiel à celle des lentilles barreau extérieures (20', 30' ; 20'^{xx} , 30'^{xx} ; 20'', 30'' ; 20^{xx}, 30^{xx} ; 20^{''xx}, 30^{"xx}).

9. Système de transmission d'images pour endoscopes rigides et tubes visuels similaires selon une des revendications précédentes du brevet, **caractérisé en ce que**
- les éléments principaux de lentille barreau (11', 21, 31 ; 11 ; 11', 21", 31" ; 11', 21^{xx}, 31^{xx}; 11', 21"^{xx}, 31''^{xx}) sont symétriques par rapport à leur plan médian perpendiculaire à l'axe optique.

10. Système de transmission d'images pour endoscopes rigides et tubes visuels similaires selon une des revendications précédentes du brevet, **caractérisé en ce que**
- les éléments principaux de lentille barreau (11', 21, 31 ; 11, 21', 31' ; 11', 21^{'xx}, 31^{'xx}, 21'', 31'' ; 11', 21^{xx}, 31^{xx} ; 11' ; 21"^{xx}, 31"^{xx},) ne sont pas symétriques par rapport à leur plan médian perpendiculaire à l'axe optique.

11. Système de transmission d'images pour endoscopes rigides et tubes visuels similaires selon une des revendications précédentes du brevet, **caractérisé en ce que**
- la lentille barreau médiane (10 ; 10') présente des extrémités (3, 6) symétriques par rapport à un plan de symétrie (100) s'étendant à travers la lentille barreau médiane (10 ; 10') perpendiculairement à l'axe optique.

12. Système de transmission d'images pour endoscopes rigides et tubes visuels similaires selon une des revendications précédentes du brevet, dans la mesure où elle ne dépend pas de la revendication 2 du brevet, **caractérisé en ce que**
- la lentille barreau médiane (10) est symétrique par rapport à un plan de symétrie (100) s'étendant à travers la lentille barreau médiane (10) perpendiculairement à l'axe optique.

13. Système de transmission d'images pour endoscopes rigides et tubes visuels similaires selon une des revendications précédentes du brevet, **caractérisé en ce que**
- les éléments de lentille (12', 13' ; 22', 32' ; 22', 32', 23^{xx}, 33^{xx} ; 22", 32" ; 23^{xx}, 33^{xx}) mastiqués sur les éléments principaux de lentille barreau (11' ; 21, 31' ; 21'^{xx}, 31^{'xx} ; 21'', 31'' ; 21^{xx}, 31^{xx} ; 21^{''xx}, 31^{"xx}) sont symétriques entre eux par rapport à un plan de symétrie (100) s'étendant à travers la lentille barreau médiane (10 ; 10') perpendiculairement à l'axe optique.

14. Système de transmission d'images pour endoscopes rigides et tubes visuels similaires selon une des revendications précédentes du brevet, dans la mesure où elle ne dépend pas de la revendication 2 du brevet, **caractérisé en ce que**
- l'élément principal de lentille barreau (11') de la lentille barreau médiane (10') et les éléments de lentille mastiqués dessus (12', 13') constituent la lentille barreau médiane (10') sous la forme d'un cylindre.

15. Système de transmission d'images pour endoscopes rigides et tubes visuels similaires selon une des revendications précédentes du brevet, dans la mesure où elle ne dépend pas de la revendication 2 du brevet, **caractérisé en ce que**
- les éléments principaux de lentille barreau (21', 31' ; 21'^{xx}, 31'^{xx}; 21" , 31" ; 21^{xx}, 31^{xx}; 21''^{xx}, 31''^{xx},) des lentilles barreau extérieures (20', 30' ; 20'^{xx}, 30'^{xx}; 20'' , 30'' ; 20^{xx}, 30^{xx} ; 20''^{xx}, 30"^{xx},) et les éléments de lentille mastiqués dessus (22', 32' ; 23^{xx}, 22', 33^{xx}, 32' ; 22, 32" ; 23^{xx}, 33^{xx} ; 22", 32") constituent les lentilles barreau extérieures (20', 30' ; 20'^{xx}, 30'^{xx}; 20", 30" ; 20^{xx}, 30^{xx} ; 20"^{xx}, 30''^{xx}) sous la forme de cylindres.

16. Système de transmission d'images pour endoscopes rigides et tubes visuels similaires selon une des revendications précédentes du brevet, dans la mesure où elle ne dépend pas de la revendication 1 du brevet, **caractérisé en ce que**
- on n'utilise pas de tubes écarteurs entre les lentilles barreau (10 ; 10' ; 20, 30 ; 20', 30' ; 20'^{xx}, 30'^{xx}; 20'' , 30" ; 20^{xx}, 30^{xx} ; 20"^{xx}, 30"^{xx},).

17. Système de transmission d'images pour endoscopes rigides et tubes visuels similaires selon une des revendications précédentes du brevet, dans la mesure où elle ne dépend pas de la revendication 2 du brevet, **caractérisé en ce que**
- les lentilles barreau extérieures (20, 30) sont en un seul bloc.

18. Système de transmission d'images pour endoscopes rigides et tubes visuels similaires selon une des revendications 1 à 16 du brevet, **caractérisé en ce que**
- les lentilles barreau extérieures (20', 30' ; 20'^{xx}, 30'^{xx}; 20", 30", 20^{xx}, 30^{xx}; 20", 30", 20'^{xx}, 30'^{xx}) sont des lentilles barreau composites, qui présentent des éléments principaux de lentille barreau (21', 31' ; 21'^{xx}, 31'^{xx}; 21'', 31'', 21^{xx}, 31^{xx}; 21'', 31"; 21"^{xx}, 31"^{xx}) et des éléments de lentille (22', 32'; 22", 32") mastiqués dessus sur le côté tourné vers l'intérieur, de sorte que les lentilles barreau composites en résultant (20', 30' ; 20'^{xx}, 30'^{xx}; 20", 30'' ; 20^{xx}, 30^{xx}, 20'', 30'', 20"^{xx}, 30"^{xx}) sont biconvexes.

19. Système de transmission d'images pour endoscopes rigides et tubes visuels similaires selon une des revendications 1 à 16 ou 18 du brevet, **caractérisé en ce que**
- les lentilles barreau extérieures (20'^{xx}, 30^{,xx} ; 20", 30'' ; 20^{xx}, 30^{xx} ; 20"^{xx}, 30"^{xx}) sont des lentilles barreau composites, qui comportent les éléments principaux de lentille barreau (21'^{xx}, 31'^{xx}; 21", 31" ; 21"^{xx}, 31"^{xx}) et des éléments de lentille (23^{xx}, 33^{xx}) mastiqués dessus sur le côté tourné vers l'extérieur, de sorte que les lentilles barreau composites en résultant (20', 30' ; 20'^{xx}, 30'^{xx}; 20", 30" ; 20^{xx}, 30^{xx}; 20''^{xx}, 30''^{xx}) sont biconvexes.

20. Système de transmission d'images pour endoscopes rigides et tubes visuels similaires selon une des revendications 2 à 18 du brevet, dans la mesure où elle ne dépend pas de la revendication 1 du brevet, **caractérisé en ce que**
- la lentille barreau médiane (10) est en un seul bloc.

21. Système de transmission d'images pour endoscopes rigides et tubes visuels similaires selon une des revendications 2 à 18 du brevet, dans la mesure où elle ne dépend pas de la revendication 1 du brevet, **caractérisé en ce que**
- la lentille barreau médiane (10') est une lentille barreau composite qui comporte un élément principal de lentille barreau (11') et des éléments de lentille (1', 13') mastiqués dessus sur le côté tourné vers l'extérieur, de sorte que la lentille barreau composite (10') en résultant est biconvexe.

22. Système de transmission d'images pour endoscopes rigides et tubes visuels similaires selon une des revendications précédentes du brevet, dans la mesure où elle ne dépend pas de la revendication 1 du brevet, **caractérisé en ce que**
- un ou plusieurs des éléments principaux de lentille peuvent être pourvus d'une pluralité d'éléments de lentille mastiqués dessus sur le côté tourné vers l'extérieur ou mastiqués les uns sur les autres.
